# DEMANDE DE BREVET EUROPEEN

(11) **EP 4 575 882 A1**
(43) Date de publication de la demande: **25.06.2025**
(21) Numéro de dépôt: 24221019.3
(22) Date de dépôt: 18.12.2024
(51) Int. Cl.: G06F 40/232, G06F 21/55, G06F 40/242, G06F 40/35

(54) **PROCÉDÉ ET DISPOSITIF DE SÉCURISATION D'UN MODÈLE DE LANGAGE DE GRANDE TAILLE**

(30) Priorité: 19.12.2023 FR 2314479
(71) Demandeur: THALES, 92190 Meudon (FR)
(72) Inventeur: Addad, Boussad, 91767 Palaiseau (FR); KODJABACHIAN, Jérôme, 91767 Palaiseau (FR)
(74) Mandataire: Lavoix

(57) **Abrégé**

Le procédé de sécurisation d'un modèle de langage de grande taille comporte des étapes de :
-acquisition (30) d'une requête sous forme chaîne de caractères initiale (CH-i),
-premier filtrage (32) de ladite chaîne de caractères initiale pour obtenir une chaîne de caractères filtrée (CH-f), le premier filtrage comportant une détection de caractères spéciaux dans la chaîne de caractères initiale et remplacement de chaque caractère spécial détecté par un espace,
-extraction (34, 36) de la chaîne de caractères filtrée d'au moins un fragment formé d'un groupe de caractères suivi et/ou précédé par un espace, et vérification (38) d'une présence dudit fragment dans un dictionnaire de mots autorisés, et
- deuxième filtrage (40) de la chaîne de caractères initiale pour obtenir une chaîne de caractères traitée (CH-T), ledit deuxième filtrage (40) comportant une suppression de la chaîne de caractères initiale desdits fragments n'appartenant pas audit dictionnaire de mots autorisés.

## Description

La présente invention concerne un procédé de sécurisation d'un modèle de langage de grande taille, préalablement entraîné par apprentissage machine pour fournir des informations suite à une requête formulée sous forme écrite.

L'invention concerne également un dispositif de sécurisation d'un modèle de langage de grande taille et un programme d'ordinateur associés.

L'invention se situe dans le domaine de la cybersécurité.

Récemment, grâce aux progrès dans le domaine de l'intelligence artificielle, ont été développés des modèles de langage de grande taille, connus sous l'acronyme LLM de l'anglais « Large Language Models », qui mettent en oeuvre des réseaux de neurones profonds, entraînés par apprentissage machine sur de grandes quantités de texte, par exemple par apprentissage auto-supervisé ou semi-supervisé.

De tels modèles de langage de grande taille ont notamment été mis en oeuvre dans des logiciels qui sont des agents conversationnels (ou « chats » en anglais), par exemple ChatGPT^{®} (pour « Chat Generative Pre-trained Transformer ») qui permettent, sur la base d'une requête formulée par un utilisateur en langage naturel, dans une langue donnée, d'obtenir une réponse adéquate. Cette technologie a démontré de très bonnes performances sur des tâches de type résumé de texte, rédaction de dissertations, programmation informatique, et plus généralement sur des tâches relativement complexes.

Bien entendu, de tels agents conversationnels mettant en oeuvre des modèles de langage de grande taille sont programmés pour fournir des réponses dans un cadre légal donné (ils sont alors dits « alignés »), et éviter de fournir toute information permettant de contribuer à une action illégale, par exemple fournir du code informatique pour réaliser un piratage informatique. On appelle cette contrainte le cadrage du modèle ou alignement du modèle.

Parmi les modèles de langage de grande taille connus à l'heure actuelle, certains sont de type « boîte blanche », c'est-à-dire que l'architecture du réseau de neurones formant le modèle, le nombre de couches, le type de liaisons entre les couches et les pondérations associées sont connus. En d'autres termes, le code source du réseau de neurones formant le modèle est rendu public. C'est par exemple le cas du modèle Llama^{®} de Meta ou Alpaca^{®} (version modifiée de Llama) de l'Université de Stanford.

Il a été démontré qu'il est possible d'attaquer un modèle de langage de grande taille par une attaque appelée « évasion de modèle », c'est-à-dire de formuler par traitement machine une requête écrite modifiée, également appelée « prompt adversaire », contenant des suffixes qui permettent de surmonter le cadrage du modèle, et donc d'obtenir une réponse à une requête sortant du cadre légal initialement prévu. Une telle attaque d'évasion de modèle est décrite dans l'article « Universal and Transferable Adversarial Attacks on Aligned Language Models », de Andy Zou, Zifan Wang, J. Zico Kolter and Matt Fredrikson, publié en 2023, https://arxiv.org/abs/2307.15043.

En effet, pour les modèles de langage de grande taille, pour un traitement automatique de requêtes formulées sous forme écrite, il est connu d'appliquer un découpage (en anglais « tokenization ») des chaînes de caractères sous forme de sous-mots de caractères consécutifs (en anglais « tokens ») qui sont générés en fonction de leurs fréquences d'occurrence afin d'optimiser la compression du vocabulaire considéré, en remplaçant des chaînes de caractères longues par des sous-mots de taille réduite. Ainsi, une chaîne de caractères initiale formant une phrase se retrouve transformée en une suite de sous-mots non intelligibles pour un humain. Par exemple, la technique de compression par le mécanisme BPE (pour « Byte-Pair Encoding ») permet de représenter les mots d'un langage naturel (par exemple, 600 000 mots différents en anglais) par un ensemble d'environ 32000 sous-mots (ou tokens). Une attaque d'évasion de modèle consiste à ajouter des tokens dans une requête, typiquement en fin de requête sous forme de suffixe, ou en début de requête sous forme de prefixe, pour surmonter le cadrage du modèle. Les tokens ajoutés sont générés par apprentissage machine à cet effet. Ainsi, grâce une telle modification de requête, il serait possible d'obtenir par exemple des informations relatives au piratage informatique d'un réseau bancaire par exemple. Dans ce cas, un tiers malveillant peut utiliser un modèle de langage de grande taille à des fins illégales.

Ainsi, il a été démontré que les modèles de langage de grande taille en « boîte blanche » présentent des failles de sécurité.

De plus, il est connu que certaines attaques sont transférables également pour être appliquées sur des modèles d'intelligence artificielle en « boîte noire » i.e. dont l'architecture et les paramètres ne sont pas connus. Il est donc à craindre que des attaques mises au point sur des modèles de langage de grande taille en « boîte blanche » soient transférés à des modèles de langage de grande taille en « boîte noire », ce qui présente un danger en termes de cybersécurité.

La présente invention a pour objet de remédier aux inconvénients de l'état de la technique en proposant un procédé de sécurisation d'un modèle de langage de grande taille permettant de lutter contre d'éventuelles attaques du type décrit ci-dessus.

A cet effet, l'invention propose, selon un aspect, un procédé de sécurisation d'un modèle de langage de grande taille, préalablement entraîné par apprentissage machine pour fournir des informations suite à une requête formulée sous forme écrite. Ce procédé I comporte des étapes mises en oeuvre par un processeur de calcul de :
- acquisition d'une requête sous forme chaîne de caractères initiale,
- premier filtrage de ladite chaîne de caractères initiale pour obtenir une chaîne de caractères filtrée, le premier filtrage comportant une détection de caractères spéciaux dans la chaîne de caractères initiale et remplacement de chaque caractère spécial détecté par un espace ;
- extraction de la chaîne de caractères filtrée d'au moins un fragment, dans un ordre de parcours donné, un fragment étant formé d'un groupe de caractères suivi et/ou précédé par un espace, et vérification d'une présence dudit fragment dans un dictionnaire de mots autorisés,
- en cas d'absence d'au moins un fragment du dictionnaire de mots autorisés, deuxième filtrage de la chaîne de caractères initiale pour obtenir une chaîne de caractères traitée, ledit deuxième filtrage comportant une suppression de la chaîne de caractères initiale desdits fragments n'appartenant pas audit dictionnaire de mots autorisés, la chaîne de caractères traitée formant une requête sécurisée à fournir en entrée dudit modèle de langage de grande taille.

Avantageusement, le procédé de sécurisation proposé permet de filtrer les requêtes de sorte à supprimer des fragments générés par un traitement machine, en particulier de fragments générés sur la base du mécanisme BPE, et de cette manière de diminuer au maximum le risque de sortir du cadrage initialement prévu du modèle de langage de grande taille. Ainsi une utilisation illégale ou frauduleuse du modèle de langage de grande taille est empêchée. Avantageusement, le procédé proposé est rapide et automatique.

Le procédé de sécurisation d'un modèle de langage de grande taille selon l'invention peut également présenter une ou plusieurs des caractéristiques ci-dessous, prises indépendamment ou selon toutes les combinaisons techniquement envisageables.

Le deuxième filtrage met en oeuvre une suppression de chaque fragment n'appartenant pas audit dictionnaire de mots autorisés.

Le deuxième filtrage met en oeuvre une suppression de tous les fragments situés entre deux fragments n'appartenant pas audit dictionnaire de mots autorisés.

Le deuxième filtrage met en oeuvre une suppression de tous les fragments suivant un premier fragment, dans l'ordre de parcours, n'appartenant pas audit dictionnaire de mots autorisés.

La vérification comporte en outre une vérification d'une présence dudit fragment dans une première liste complémentaire dite liste blanche, comprenant des mots autorisés.

Le procédé en outre une détermination d'appartenance de chaque fragment à une deuxième liste complémentaire dite liste noire, et une sélection d'un mode de deuxième filtrage en fonction d'un résultat de ladite détermination.

Le procédé comporte en outre un affichage sur une interface graphique des fragments n'appartenant pas audit dictionnaire de mots autorisés pour correction par un utilisateur.

Le premier filtrage comporte en outre un remplacement de plusieurs espaces successifs par un seul espace.

Selon un autre aspect, l'invention concerne un dispositif de sécurisation d'un modèle de langage de grande taille, préalablement entraîné par apprentissage machine pour fournir des informations suite à une requête formulée sous forme écrite. Ce dispositif comporte un processeur de calcul configuré pour mettre en oeuvre :
- un module d'acquisition d'une requête sous forme chaîne de caractères initiale,
- un premier module de filtrage de ladite chaîne de caractères initiale pour obtenir une chaîne de caractères filtrée, le filtrage comportant une détection de caractères spéciaux dans la chaîne de caractères et remplacement de chaque caractère spécial détecté par un espace ;
- un module d'extraction de la chaîne de caractères filtrée d'au moins un fragment, dans un ordre de parcours donné, un fragment étant formé d'un groupe de caractères suivi et/ou précédé par un espace, et de vérification d'une présence dudit fragment dans un dictionnaire de mots autorisés,
- en cas d'absence d'au moins un fragment du dictionnaire de mots autorisés, un deuxième module de filtrage de la chaîne de caractères initiale pour obtenir une chaîne de caractères traitée, ledit deuxième filtrage comportant une suppression de la chaîne de caractères initiale desdits fragments n'appartenant pas audit dictionnaire de mots autorisés, la chaîne de caractères traitée formant une requête sécurisée à fournir en entrée dudit modèle de langage de grande taille.

Avantageusement, le dispositif de sécurisation d'un modèle de langage de grande taille est configuré pour mettre en oeuvre le procédé de sécurisation d'un modèle de langage de grande taille tel que brièvement décrit ci-dessus, dans toutes ses variantes.

Selon un autre aspect, l'invention concerne un support d'enregistrement d'informations, sur lequel sont mémorisées des instructions logicielles pour l'exécution d'un procédé de sécurisation d'un modèle de langage de grande taille tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en oeuvre par un dispositif électronique programmable, mettent en oeuvre un procédé de sécurisation d'un modèle de langage de grande taille tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre un dispositif de sécurisation d'un modèle de langage de grande taille selon un mode de réalisation ;
[Fig 2] la figure 2 est un logigramme des principales étapes d'un procédé de sécurisation d'un modèle de langage de grande taille selon un premier mode de réalisation ;
[Fig 3] la figure 3 est un exemple de chaînes de caractères formant une requête modifiées suite aux étapes mises en oeuvre par le procédé de sécurisation d'un modèle de langage de grande taille ;
[Fig 4] la figure 4 est un logigramme des étapes supplémentaires d'un procédé de sécurisation d'un modèle de langage de grande taille selon un deuxième mode de réalisation.

L'invention s'applique pour tout type de modèle de langage de grande taille ou LLM, entraîné par apprentissage machine pour fournir des informations suite à une requête formulée sous forme écrite, et appliqué par exemple dans un logiciel de type agent conversationnel. En particulier l'invention s'applique avec tout LLM réalisé sous forme de réseau de neurones profond (en anglais « deep learning »).

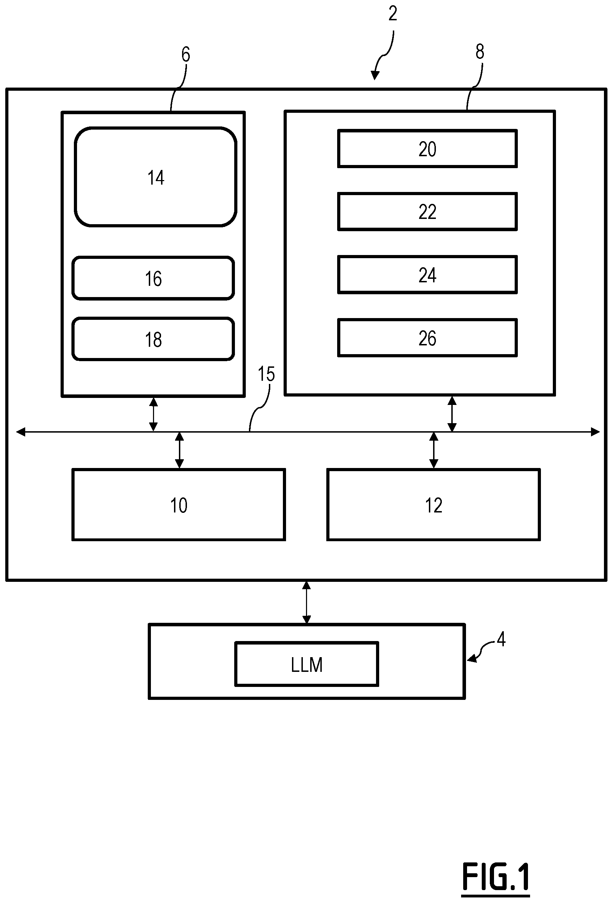

La figure 1 représente un dispositif 2 de sécurisation d'un modèle de langage de grande taille 4, désigné également par modèle LLM.

Le dispositif 2 est un dispositif électronique programmable, qui met en oeuvre un procédé de sécurisation de modèle LLM permettant d'obtenir une requête sécurisée à fournir en entrée dudit modèle LLM 4.

Le terme requête sécurisée désigne ici une requête traitée pour limiter au maximum un risque d'utilisation du modèle LLM 4 en dehors du cadrage initial, ou en d'autres termes, une utilisation du modèle LLM 4 pour obtenir des informations sortant d'un cadre légal prédéterminé.

A titre d'exemple non limitatif, un des objectifs de l'invention est d'éviter toute fourniture d'information utile pour une action malveillante, par exemple un piratage de système informatique.

Selon les modes de réalisation, le modèle LLM 4 est exécuté par le dispositif 2, ou par un dispositif électronique programmable externe au dispositif 2, par exemple connecté au dispositif 2 via un réseau de communication.

Le dispositif 2 de sécurisation d'un modèle LLM est un dispositif électronique programmable et comporte, dans un mode de réalisation, une unité de mémoire électronique 6, un ou plusieurs processeurs 8, une interface d'entrée/sortie 10 et une interface de communication 12, ces éléments étant configurés pour communiquer entre eux via un bus de communication 15 interne au dispositif 2. L'interface d'entrée/sortie 10 comporte par exemple un écran d'affichage et un dispositif de saisie de caractères, par exemple un clavier, permettant à un utilisateur de saisir des requêtes sous forme écrite, pour interroger le modèle LLM 4.

Dans un mode de réalisation, la mémoire électronique 6 mémorise un dictionnaire 14 de mots autorisés dans un ou plusieurs langage(s) naturel(s) prédéterminé(s).

Selon des variantes, le dictionnaire 14 de mots autorisés est mémorisé dans une base de données externe au dispositif 2, le dispositif 2 étant connecté à la base de données externe, par exemple au travers de l'interface de communication 12.

Dans certains modes de réalisation, la mémoire électronique 6 mémorise en outre une première liste complémentaire 16, également appelée liste blanche 16, de mots autorisés, qui vient compléter le dictionnaire 14 de mots autorisés, et une deuxième liste complémentaire 18, également appelée liste noire 18, de mots considérés dangereux, pouvant potentiellement aboutir à des requêtes illégales, sortant du cadrage initial du modèle.

Le processeur de calcul 8 du dispositif 2 est configuré pour exécuter :
- un module 20 d'acquisition d'une requête sous forme chaîne de caractères initiale,
- un premier module 22 de filtrage, configuré pour filtrer la chaîne de caractères initiale pour obtenir une chaîne de caractères filtrée, le filtrage comportant une détection de caractères spéciaux dans la chaîne de caractères et remplacement de chaque caractère spécial détecté par un espace ;
- un module 24 d'extraction de la chaîne de caractères filtrée d'au moins un fragment, dans un ordre de parcours donné, un fragment étant formé d'un groupe de caractères suivi et/ou précédé par un espace, et de vérification d'une présence du fragment dans le dictionnaire de mots autorisés 14, et
- un deuxième module 26 de filtrage de la chaîne de caractères initiale pour obtenir une chaîne de caractères traitée, le deuxième filtrage comportant une suppression de la chaîne de caractères initiale d'au moins un fragment n'appartenant pas audit dictionnaire de mots autorisés.

Selon des variantes, la présence du ou des fragments extraits dans la première liste complémentaire 16 et/ou dans la deuxième liste complémentaire 18 est vérifiée.

Plusieurs variantes de mises en oeuvre du deuxième module 26 de filtrage sont envisagées, comme décrit plus en détail ci-après.

La chaîne de caractères traitée obtenue par la mise en oeuvre de ces modules forme une requête sécurisée à fournir en entrée du modèle LLM 4.

Le dispositif est en outre configuré pour exécuter le modèle LLM en fournissant en entrée la requête sécurisée obtenue. Cela garantit avantageusement que le résultat fourni par l'exécution du modèle LLM est conforme au cadrage du modèle.

Dans un mode de réalisation, les modules 20, 22, 24, 26 sont réalisés sous forme d'instructions logicielles formant un programme d'ordinateur, qui, lorsqu'il est exécuté par un dispositif électronique programmable, met en oeuvre un procédé de sécurisation d'un modèle de langage de grande taille tel que décrit.

En variante non représentée, les modules 20, 22, 24, 26 sont réalisés chacun sous forme de composants logiques programmables, tels que des FPGA (de l'anglais *Field Programmable Gate Array*), des microprocesseurs, des composants GPGPU (de l'anglais *General-purpose processing on graphies processing*), ou encore de circuits intégrés dédiés, tels que des ASIC (de l'anglais *Application Specific Integrated Circuit*)*.*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

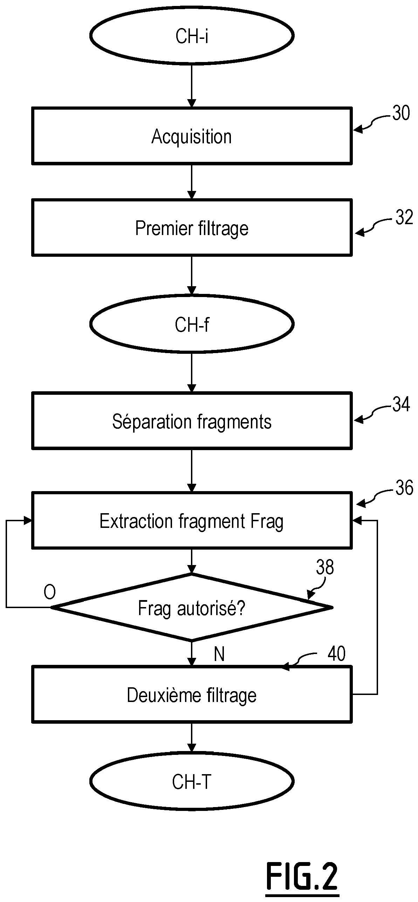

La figure 2 est un logigramme des principales étapes d'un premier mode de réalisation du procédé de sécurisation d'un modèle de langage de grande taille. Le procédé est mis en oeuvre par un processeur d'un dispositif électronique programmable 2 tel que décrit en référence à la figure 1.

Le procédé comporte une première étape 30 d'acquisition d'une requête, adressée au modèle LLM, sous forme d'une chaîne de caractères initiale CH-i.

Par exemple, la chaîne de caractères initiale CH-i est fournie via une interface I/O, par saisie d'un utilisateur ou transmise par une autre application logicielle.

L'expression chaîne de caractères se réfère à une suite de caractères codés selon un format de codage choisi, dans un ensemble de caractères comprenant des lettres d'un alphabet donné, par exemple l'alphabet latin, et regroupés pour former des mots dans une langue ou éventuellement plusieurs langues prédéterminées qui s'écrivent avec l'alphabet utilisé, séparés par des caractères d'espacement ou espaces, ainsi que des chiffres et des caractères dits spéciaux.

Les caractères spéciaux regroupent des caractères de ponctuation, et également des symboles dont une signification est connue (par exemple symbole représentatifs de monnaies, unités physiques etc). Les caractères spéciaux sont préalablement répertoriés.

La requête est donc formulée sous forme écrite.

Lors de l'étape 30 la chaîne de caractères initiale CH-i est mémorisée dans une unité de mémoire du dispositif électronique programmable mettant en oeuvre le procédé.

Le procédé comprend ensuite une étape 32 de mise en oeuvre d'un premier filtrage de la chaîne de caractères initiale CH-i.

Le premier filtrage 32 comporte une détection des caractères spéciaux dans la chaîne de caractères initiale CH-i, et un remplacement de chaque caractère spécial détecté par un espace.

Optionnellement, l'étape de premier filtrage 32 comporte un remplacement des espaces successifs par un seul espace.

En sortie de l'étape de premier filtrage 32 est obtenue une chaîne de caractères filtrée CH-f.

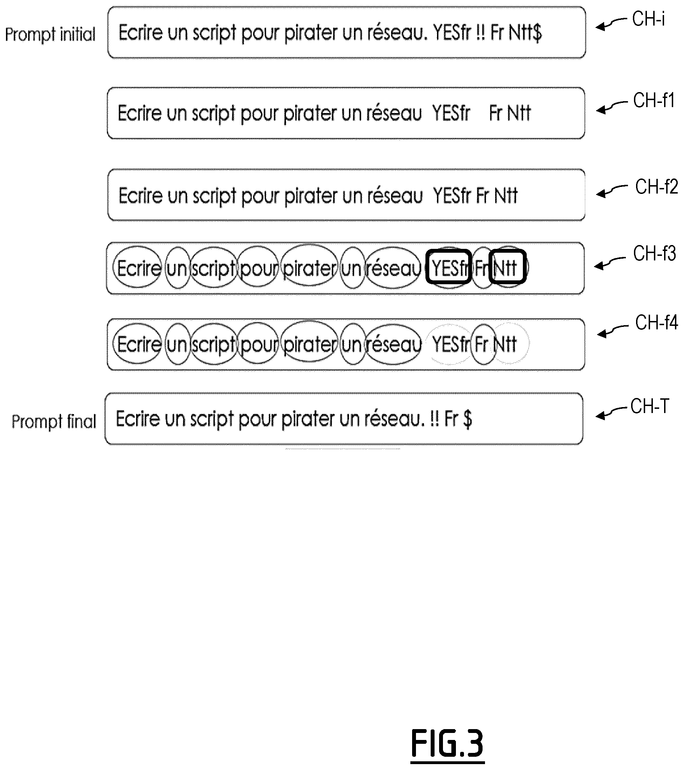

La figure 3 illustre un exemple de chaîne de caractères initiale CH-i, une première chaîne de caractères filtrée CH-f1 résultant de la chaîne de caractères initiale CH-i après suppression des caractères spéciaux, et une deuxième chaîne de caractères filtrée CH-f2 obtenue à partir de la première chaîne de caractères filtrée CH-f1 en remplaçant des espaces multiples par des espaces simples.

Le procédé comporte en outre une étape 34 de séparation de la chaîne de caractères filtrée en fragments, chaque fragment étant un regroupement de caractères précédé et/ou suivi d'un espace.

Un résultat de cette étape 34 est illustré dans l'exemple de la figure 3, où la une troisième chaîne de caractères Ch-f3 représente la deuxième chaîne de caractères filtrée Ch-f2 dans laquelle chaque fragment est entouré.

Le procédé comprend ensuite une extraction 36 d'un fragment dans un parcours des fragments dans un ordre de parcours donné, et pour chaque fragment extrait, une vérification 38 de présence du fragment dans le dictionnaire de mots autorisés, optionnellement augmenté des mots de la première liste complémentaire ou liste blanche.

Dans ce cas optionnel, la présence dans le dictionnaire de mots autorisé ou dans la première liste complémentaire (liste blanche) signifie que le fragment traité est un fragment autorisé.

L'ordre de parcours est typiquement l'ordre de lecture des mots dans le langage utilisé.

En cas de vérification de présence positive, ou, en d'autres termes, si le fragment considéré est un mot autorisé, l'étape de vérification de présence 38 est suivie de l'extraction 36 d'un fragment suivant, jusqu'à la fin de la liste de fragments de la chaîne de caractères filtrée.

En cas d'absence du fragment dans le dictionnaire de mots autorisés (vérification négative à l'étape 38), il est déduit que le fragment est non autorisé.

Selon un mode de réalisation, les étapes 36 et 38 sont appliquées à tous les fragments, et les fragments non autorisés sont marqués.

Dans l'exemple de la figure 3, dans la troisième chaîne de caractères filtrée Ch-f3, les fragments absents du dictionnaire de mots autorisé, respectivement « YESfr » et « Ntt », sont encadrés, et dans la quatrième chaîne de caractères filtrée CH-f4 les fragments autorisés sont mis en exergue.

Le procédé comprend un deuxième filtrage 40 de la chaîne de caractères initiale, par suppression au moins du fragment absent du dictionnaire de mots autorisés ou fragment non autorisé.

Selon un premier mode du deuxième filtrage, les fragments de la chaîne de caractères filtrée sont parcourus, et chaque fragment absent du dictionnaire de mots autorisés est supprimé lors du deuxième filtrage 40. Le résultat de cette opération est alors une chaîne de caractères traitée CH-T, comprenant les mots du dictionnaire de mots autorisés de la chaîne de caractères initiale et les caractères spéciaux.

Dans l'exemple de la figure 3, la chaîne de caractères traitée CH-T comprend en effet les mots et caractères spéciaux de la chaîne de caractères initiale CH-i, sans les fragments « YESfr » et « Ntt » qui ont été détectés et supprimés.

Avantageusement, dans cette variante, les caractères spéciaux sont préservés, car dans certains cas de figure, ils sont nécessaires pour l'interprétation linguistique de la requête formulée par l'utilisateur.

Selon une deuxième mode du deuxième filtrage, tous les fragments compris entre deux fragments non autorisés sont supprimés, en plus des fragments non autorisés. Dans ce deuxième mode de réalisation, des fragments correspondant à des mots du dictionnaire de mots autorisés se trouvant entre deux fragments absents du dictionnaire sont également supprimés. Ainsi, ce deuxième mode du deuxième filtrage applique une modification plus sévère que le premier mode décrit ci-dessus.

Selon un troisième mode du deuxième filtrage, tous les fragments apparaissant après un premier fragment non autorisé détecté, en suivant l'ordre de parcours choisi, sont supprimés. Ainsi, ce troisième mode du deuxième filtrage applique une modification plus sévère que les premier et deuxième modes décrits ci-dessus. Dans cette troisième variante, le traitement est simplifié car le parcours des fragments peut être arrêté dès qu'un fragment non autorisé est détecté.

De plus, dans chacun des modes du deuxième filtrage décrits ci-dessus, il est envisageable également de supprimer également les caractères spéciaux soit compris entre deux fragments absents du dictionnaire, soit positionnés après le premier fragment absent du dictionnaire détecté.

Enfin, en complément optionnel, il est possible d'afficher avant le deuxième filtrage les fragments non autorisés détectés, seuls ou soulignés dans la requête initiale, et demander à l'utilisateur de corriger. En effet, le procédé tel que décrit ci-dessus est sensible aux erreurs typographiques, ce qui est d'autant plus critique dans des langues à écriture accentuée, comme le français. Dans ce cas de figure, des mots du dictionnaire mal orthographiés sont susceptibles d'être supprimés par le deuxième filtrage, alors qu'il ne s'agit pas d'une intention malveillante de l'utilisateur. Ainsi, cette étape permet à un utilisateur non malveillant d'utiliser confortablement le modèle de langage de grande taille.

Selon des variantes classiques, il est possible de proposer automatiquement une correction d'orthographe par rapport à des mots existants du dictionnaire de mots autorisés, éventuellement augmenté de la première liste complémentaire.

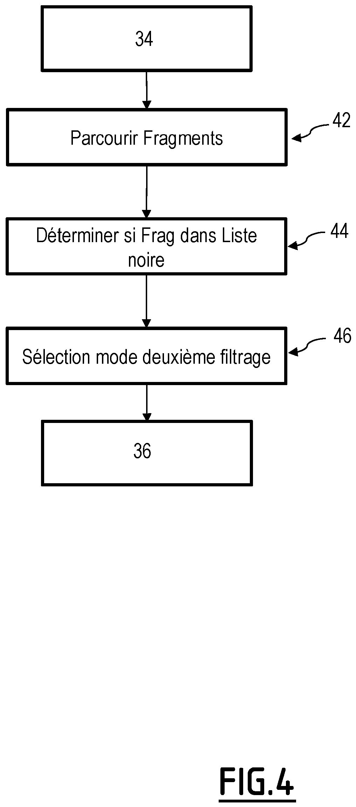

La figure 4 est un logigramme des étapes supplémentaires d'un deuxième mode de réalisation du procédé de sécurisation d'un modèle de langage de grande taille.

Les étapes communes avec le premier mode de réalisation ne sont pas décrites à nouveau.

A l'issue de l'étape 34 de séparation en fragments, le procédé comprend, dans ce deuxième mode de réalisation, les étapes supplémentaires suivantes.

Les fragments sont parcourus (étape 42) et il est déterminé à l'étape 44 si l'un des fragments appartient à la deuxième liste complémentaire ou liste noire. Cela signifie alors que la requête comprend des mots considérés comme pouvant aboutir à des requêtes illégales, sortant du cadrage initial du modèle. Par exemple, la liste noire comprend des mots comme « pirater », « piratage ».

Sans que toutes les requêtes comportant ces mots soient illégales, on comprend que de telles requêtes nécessitent une attention particulière.

En fonction du résultat de la détermination 44, un mode de deuxième filtrage est sélectionné à l'étape de sélection 46.

Par exemple, si un ou plusieurs des fragments de la requête appartiennent à la liste noire, le troisième mode de deuxième filtrage, qui est le plus sévère, est appliqué. En variante, le deuxième mode du deuxième filtrage est appliqué.

Si aucun des fragments de la requête n'appartient à la liste noire, le premier mode de deuxième filtrage est appliqué, dans lequel seuls les fragments non autorisés sont supprimés.

Dans chacun des modes de réalisation, la chaîne de caractères traitée CH-T est fournie en tant que requête sécurisée en entrée du modèle de langage de grande taille.

Le modèle de langage de grande taille est ensuite exécuté lors d'une étape d'exécution du modèle de langage de grande taille et fournit un résultat en sortie.

L'application des étapes du procédé décrites ci-dessus permet d'assurer automatiquement que le modèle de langage de grande taille est exécuté de manière sécurisée, c'est-à-dire que le résultat obtenu en sortie respecte le cadrage initialement prévu.

En d'autres termes, le procédé proposé permet de contrecarrer automatiquement une éventuelle attaque d'« évasion de modèle ».

Le procédé de sécurisation d'un modèle de langage de grande taille a été décrit ci-dessus par des étapes, il est clair que certaines des étapes peuvent être exécutées simultanément ou en coopération pour des optimisations calculatoires, de telles optimisations étant à la portée de l'homme du métier.

Le procédé de sécurisation d'un modèle de langage de grande taille a été décrit en faisant référence à un dictionnaire de mots autorisés dans une ou plusieurs langues.

Il est clair que ce procédé s'applique de manière analogue pour des langages de programmation logicielle, en mettant en oeuvre un dictionnaire ou une première liste complémentaire des mots réservés du langage de programmation qui sont autorisés, afin de distinguer ensuite des fragments autorisés et des fragments non autorisés.

Avantageusement, le procédé proposé est simple, automatique et efficace, et ne nécessite pas une mise en oeuvre d'interprétations complexes de structures de phrase ou grammaticales, ni de modèles complexes, tout en étant efficace pour éviter une utilisation en dehors du cadrage initial du modèle de langage de grande taille. Ainsi, la cybersécurité des modèles de langage de grande taille est améliorée.

Avantageusement, lorsque le premier mode du deuxième filtrage est mis en oeuvre, les caractères spéciaux sont préservés, ce qui permet de conserver une bonne performance du modèle LLM.

## Revendications

1. Procédé de sécurisation d'un modèle de langage de grande taille (4), préalablement entraîné par apprentissage machine pour fournir des informations suite à une requête formulée sous forme écrite, **caractérisé en ce qu'**il comporte des étapes mises en oeuvre par un processeur de calcul de :
- acquisition (30) d'une requête sous forme chaîne de caractères initiale (CH-i),
- premier filtrage (32) de ladite chaîne de caractères initiale pour obtenir une chaîne de caractères filtrée (CH-f), le premier filtrage comportant une détection de caractères spéciaux dans la chaîne de caractères initiale et remplacement de chaque caractère spécial détecté par un espace ;
- extraction (34, 36) de la chaîne de caractères filtrée d'au moins un fragment, dans un ordre de parcours donné, un fragment étant formé d'un groupe de caractères suivi et/ou précédé par un espace, et vérification (38) d'une présence dudit fragment dans un dictionnaire de mots autorisés,
- en cas d'absence d'au moins un fragment du dictionnaire de mots autorisés, deuxième filtrage (40) de la chaîne de caractères initiale pour obtenir une chaîne de caractères traitée (CH-T), ledit deuxième filtrage (40) comportant une suppression de la chaîne de caractères initiale desdits fragments n'appartenant pas audit dictionnaire de mots autorisés, la chaîne de caractères traitée (CH-T) formant une requête sécurisée à fournir en entrée dudit modèle de langage de grande taille.

2. Procédé selon la revendication 1, dans lequel ledit deuxième filtrage (40) met en oeuvre une suppression de chaque fragment n'appartenant pas audit dictionnaire de mots autorisés.

3. Procédé selon la revendication 2, dans lequel ledit deuxième filtrage (40) met en oeuvre une suppression de tous les fragments situés entre deux fragments n'appartenant pas audit dictionnaire de mots autorisés.

4. Procédé selon la revendication 2, dans lequel ledit deuxième filtrage (40) met en oeuvre une suppression de tous les fragments suivant un premier fragment, dans l'ordre de parcours, n'appartenant pas audit dictionnaire de mots autorisés.

5. Procédé selon l'une quelconque des revendications 1 à 4, dans lequel la vérification (38) comporte en outre une vérification d'une présence dudit fragment dans une première liste complémentaire (16) dite liste blanche, comprenant des mots autorisés.

6. Procédé selon l'une des revendications 1 à 5, comprenant en outre une détermination (44) d'appartenance de chaque fragment à une deuxième liste complémentaire (18) dite liste noire, et une sélection (46) d'un mode de deuxième filtrage en fonction d'un résultat de ladite détermination.

7. Procédé selon l'une quelconque des revendications 1 à 6, comportant en outre un affichage sur une interface graphique des fragments n'appartenant pas audit dictionnaire de mots autorisés pour correction par un utilisateur.

8. Procédé selon l'une quelconque des revendications 1 à 7, dans lequel le premier filtrage (32) comporte en outre un remplacement de plusieurs espaces successifs par un seul espace.

9. Programme d'ordinateur comportant des instructions logicielles qui lorsqu'elles sont exécutées par un dispositif électronique programmable, mettent en oeuvre un procédé de sécurisation d'un modèle de langage de grande taille conforme aux revendications 1 à 8.

10. Dispositif de sécurisation d'un modèle de langage de grande taille, préalablement entraîné par apprentissage machine pour fournir des informations suite à une requête formulée sous forme écrite, **caractérisé en ce qu'**il comporte un processeur de calcul (8) configuré pour mettre en oeuvre :
- un module d'acquisition (20) d'une requête sous forme chaîne de caractères initiale (CH-i),
- un premier module de filtrage (22) de ladite chaîne de caractères initiale pour obtenir une chaîne de caractères filtrée (CH-f), le filtrage comportant une détection de caractères spéciaux dans la chaîne de caractères et remplacement de chaque caractère spécial détecté par un espace,
- un module (24) d'extraction de la chaîne de caractères filtrée d'au moins un fragment, dans un ordre de parcours donné, un fragment étant formé d'un groupe de caractères suivi et/ou précédé par un espace, et de vérification d'une présence dudit fragment dans un dictionnaire de mots autorisés,
- en cas d'absence d'au moins un fragment du dictionnaire de mots autorisés, un deuxième module de filtrage (26) de la chaîne de caractères initiale pour obtenir une chaîne de caractères traitée (CH-T), ledit deuxième filtrage comportant une suppression de la chaîne de caractères initiale desdits fragments n'appartenant pas audit dictionnaire de mots autorisés, la chaîne de caractères traitée (CH-T) formant une requête sécurisée à fournir en entrée dudit modèle de langage de grande taille.
